# EUROPEAN PATENT APPLICATION

(11) **EP 4 167 122 A1**
(43) Date of publication of application: **19.04.2023**
(21) Application number: 22180298.6
(22) Date of filing: 22.06.2022
(51) Int. Cl.: G06F 40/279, G06F 40/174, G06F 16/25

(54) **EXTRACTING KEY VALUE PAIRS USING POSITIONAL COORDINATES**

(30) Priority: 18.10.2021 US 202117504339
(71) Applicant: Intuit Inc., Mountain View, CA 94043 (US)
(72) Inventor: DE PEUTER, Conrad, Mountain View, 94043 (US)
(74) Representative: D Young & Co LLP

(57) **Abstract**

Certain aspects of the present disclosure provide techniques for extracting information, including receiving a document comprising a plurality of tokens, wherein each token is associated with position coordinates; determining a classification for at least one token; generating a plurality of key-value pairs based on the positional coordinates; analyzing each respective key-value pair of the plurality of key-value pairs based on whether a token of the two tokens of each respective key-value pair matches a type associated with the respective key-value pair; determining a correct key-value pair of the plurality of key-value pairs based on the correct key-value pair comprising a matched token that matches the type associated with the correct key-value pair; and providing the classification and the correct key-value pair to a component of an application associated with the document.

## Description

Aspects of the present disclosure relate to using machine learning to extract information based on key-value pairs of tokens.

Extracting information from documents is difficult because relationships between different information in a document are not always readily apparent in the raw data extracted from documents. Conventionally, a system may extract the raw content in one large text string and then attempt to determine from that string relationships within the extracted data. However, due to the inherent complexity of machine-based information extraction from documents, conventional systems unreliably determine relationships between extracted data.

Accordingly, there is a need for methods of determining relationships between tokens in a document by a machine learning model without requiring arduous extra processes or human operators.

### BRIEF SUMMARY

Particular aspects are set out in the appended independent claims. Various optional embodiments are set out in the dependent claims.

Certain embodiments provide a method for extracting information. The method generally includes receiving a document comprising a plurality of tokens, wherein each token in the plurality of tokens has a horizontal coordinate and a vertical coordinate; determining a classification for at least one token of the plurality of tokens; generating a plurality of key-value pairs based on the horizontal coordinate of each token of the plurality of tokens and the vertical coordinate of each token of the plurality of tokens, wherein each key-value pair comprises two tokens of the plurality of tokens with a same horizontal coordinate or a same vertical coordinate; analyzing each respective key-value pair of the plurality of key-value pairs based on whether a token of the two tokens of each respective key-value pair matches a type associated with the respective key-value pair; determining a correct key-value pair of the plurality of key-value pairs based on the correct key-value pair comprising a matched token that matches the type associated with the correct key-value pair; and providing the classification and the correct key-value pair to a component of an application associated with the document.

Other embodiments provide processing systems configured to perform the aforementioned method as well as those described here; non-transitory, computer-readable media comprising instructions that, when executed by one or more processors of a processing system, cause the processing system to perform the aforementioned method as well as those described here; a computer program product comprised in a computer-readable medium comprising code for performing the aforementioned method as well as those further described here; and a processing system comprising means for performing the aforementioned method as well as those further described herein.

The following description and the related drawings set forth in detail certain illustrative features of one or more embodiments.

### BRIEF DESCRIPTION OF THE DRAWINGS

The appended figures depict certain aspects of the one or more embodiments and are therefore not to be considered limiting of the scope of this disclosure.
**FIG. 1** depicts an example computing environment for assigning classifications to tokens and determining key-value pairs of tokens.
**FIG. 2A** depicts an example document containing a plurality of tokens.
**FIG. 2B** depicts example pairings of tokens based on positional coordinates.
**FIG. 3** depicts an example process for assigning classifications to tokens and determining which key-value pairs of tokens are correct or incorrect.
**FIG. 4** depicts an example method for assigning classifications to tokens and determining correct key-value pairs.
**FIG. 5** depicts an example processing device that may be configured to perform the methods described herein.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for generating key-value pairs based on classifications and positional coordinates of extracted tokens of a document.

Tokenization is a process of demarcating and, in some cases, classifying sections of a string of input characters. The resulting tokens may then be used for other processing tasks. For example, tokens may be used to build an index of terms within a document, and/or to query documents for the presence of such terms.

Parsing a document so that data within the document can be processed for some useful task may include extracting raw data and tokenizing the raw data and/or relying on a token dictionary to generate tokens, which may include subsets of related text or characters extracted from the raw data. In order to avoid misclassifying and determining incorrect relationships between data extracted from a document, the data must be extracted in a way that allows for easier classification and relationship determination.

Consider a simple example in which a document, such as a W-2 tax form filled with a user's information, is parsed into a single text string. Tokens may be generated based on each set of characters defined by preceding and following spaces. Once the tokens are determined, a system may attempt to determine a meaning or classification of each token by relating it to other tokens in some programmatic way, such as by relating adjacent tokens. However, depending on the structure of the underlying document, improper relationships between tokens may be inferred. For example, a tokenization of extracted text from a W2 form may be as follows:
"Account of" "Account Number:" "John Smith" "9876-5432" "Date Prepared:" "February 7, 2020" "Recipient's Name and Address" "Payer's Name and Address" "John Smith" "Investment Company" "222 Home Street" "111 Main Street" "Del Mar" "CA" "92130" "San Diego" "CA" "92101" "Telephone:" "(123) 456-7890" "Tax Payer ID Number: ^{∗∗∗}_^{∗∗}_1111" "Account Number:" "9876-5432" "Federal ID Number: 11-2223333"

When inferring relationships between adjacent tokens (e.g., appearing directly before or after each other in the text string), the system may relate the token "Account of:" with "Account Number:", "Account Number:" with "John Smith", and "John Smith" with "Investment Company". These relationships are clearly not correct because, for example, the Account Holder's Name is not "Account Number", the "Account Number" is not "John Smith", and the name "John Smith" is not "Investment Company". While some relationships do make sense, such as the "Date Prepared:" being related to "February 7, 2020", only a fraction of the relationships determined in the extracted text as a whole would be correct. To resolve this technical problem, additional processing steps, and in some cases manual intervention, are required in order to confirm proper relationships are determined.

In order to overcome these challenges, embodiments described herein provide an automated approach for classifying tokens and generating key-value pairs of tokens in order to determine proper relationships between data within a document. Key-value pairs generally include two tokens, where a first token is the "key" token and the second token is the "value" token. The "key" token indicates a meaning or topic of the token (e.g., "Ordinary Dividends" or "Address") and may further be associated with a type of information that a value associated with the key token is expected to be (referred to as "a type of expected information"). The "value" token contains a value associated with the "key" token, and that value may be a specific type of information (e.g., "text" or a "numerical value") that may be compared against the type of expected information. Based on whether the type of information of the value contained by the value token matches the type of expected information, the key-value pair made up of the key token and the value token may be determined to be "correct" or "incorrect".

For example, a key token of "Ordinary Dividends" may be associated with a type of expected information such as "numerical value" because it would be expected that a value for ordinary dividends would be a number, as opposed to a word or symbol. Thus, if the key token formed a key-value pair with a value token of "100.00", the key-value pair would be determined to be "correct" because "100.00" is a numerical value, and thus, the type of information contained by the value token matches the type of expected information for the key token. However, if the key token formed a key-value pair with a value token of "South Street", the key-value pair would be determined to be "incorrect" because "South Street" is a text string, and thus, the type of information contained by the value token does not match the type of expected information for the key token.

The key-value pairs may be determined based on the positional coordinates (e.g., horizontal and/or vertical coordinates) of each token within the document, instead of where the token falls within the text string extracted from the document as in conventional methods. Thus, tokens with the same or similar positional coordinates are used to create the key-value pairs that are later determined to be correct or incorrect. Since documents with multiple tokens are more likely to organize information in accordance with positional coordinates rather than list all related tokens in order, generating the key-value pairs according to those same or similar positional coordinates and determining whether those key-value pairs are correct allows the system to create accurate relationships between tokens without the improper relationships seen in conventional methods.

For example, a document may include a table that lists "Ordinary Dividends", "in the year 2020", "$" and "100.00" all in the same row. By the conventional methods described above, this could lead to inaccurate or useless relationships between "Ordinary Dividends" and "in the year 2020", as well as "in the year 2020" and "$", and "$" and "100.00". However, in that conventional method, based on their location within the text string, a relationship "Ordinary Dividends" and "100.00" would not be created, even though the most valuable information displayed by the table would be that the value of "Ordinary Dividends" is "100.00".

Instead, in the described embodiments below, the system would form key-value pairs for "Ordinary Dividends" and "in the year 2020", "Ordinary Dividends" and "$", and "Ordinary Dividends" and "100.00" because each of those tokens share the same horizontal coordinates. From there, the system could further determine that, of those key-value pairs, only the key-value pair of "Ordinary Dividends" and "100.00" is correct because the type of information (e.g., numerical value) of "100.00" matches the type of expected information of "Ordinary Dividends", while the type of information of "in the year 2020" and "$" do not match that type of expected information. Thus, in the described embodiments, the system may determine correct relationships between tokens by generating those key-value pairs without creating the unnecessary and inaccurate relationships formed when using conventional methods, which further allows the system to avoid the necessary corrections in getting rid of the unnecessary and inaccurate relationships that are required by conventional methods.

In various embodiments, one or more machine learning models are trained and used to classify tokens based on the information contained by those tokens and to generate key-value pairs between the tokens within a document. In those embodiments, the machine learning models may also generate key-value pairs between a token within a document and a token not within the document, such as a key token determined based on a classification of a value token. For example, a value token of "123 South Street" may be generated, but no correct key-value pairs may be created based on same or similar positional coordinates of the value token. In that case, a machine learning model may determine a classification of "Address" to create a token that may be used as a key token, and then generate a key-value pair of "Address" and "123 South Street".

Beneficially, by using the classifications and the positional coordinates, the embodiments described herein can more accurately determine relationships in extracted data (such as extracted from a structured document), and can avoid corrective measures, such as manually determining the accuracies of relationships formed that are required by conventional methods, saving both time and power resources. For example, as described above, conventional methods that form relationships between tokens using the long text string can result in multiple inaccurate relationships that must be corrected. The embodiments described herein, however, use the positional coordinates of the tokens as well as the types of expected information of the key tokens in order to create accurate relationships without having to backtrack and fix inaccurately created relationships. Consequently, the increase in accuracy of determining those relationships decreases the processing requirements of the system as compared to conventional systems because no extra processes are required to determine which of the tokens are actually related.

Therefore, with the accurately captured relationships between the tokens, the system can then provide the necessary relationships, classifications, tokens, and key value pairs to an application or computing device that can use that information as input, without the heightened processing requirements of conventional methods.

### Example System for Generating Key-Value pairs

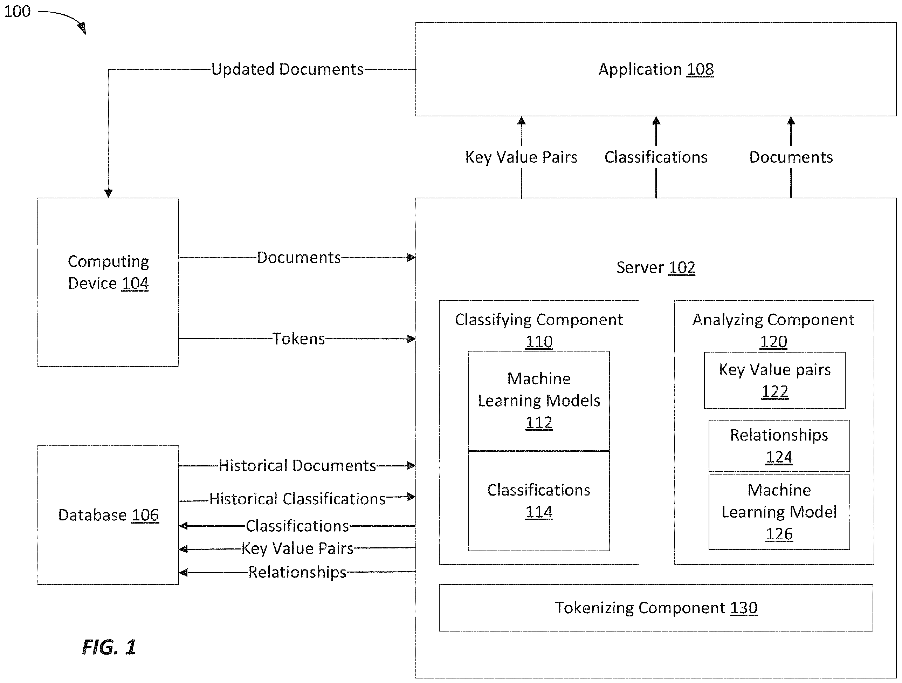

**FIG. 1** depicts an example system 100 for generating key-value pairs based on a document.

As illustrated, the system 100 includes a server 102 interacting with a computing device 104, a database 106, and an application 108. The server 102 may receive one or more historical documents and classifications from database 106, which may be used to train one or more machine learning models 112 stored on the server 102. The server 102 may additionally send determined classifications, relationships, and key-value pairs to the database so that they may be stored for future reference. The server 102 may further receive one or more documents from computing device 104 that the server 102 may analyze. Additionally, in some embodiments where the server 102 includes an application that may update documents based on determined key value pairs and classifications, the server 102 may return updated documents to the computing device 104, as well as the classifications and key-value pairs that the server 102 determines based on the documents. An updated document may comprise a document with filled in information determined by the server 102.

In this depicted embodiment, the server 102 may additionally send documents, classifications, and key-value pairs to an application 108. The application 108 may be a part of the server 102, the computing device 104, or another processing device in other embodiments. The application may then update documents by inputting certain tokens, classifications, or key-value pairs into fields of the documents, or may otherwise provide the information of the tokens, classifications, or key-value pairs in response to a query.

In this depicted example, the server 102 includes classifying component 110, analyzing component 120, and tokenizing component 130.

In this depicted example, tokenizing component 130 generate tokens based on the information contained within the documents. The tokens created by tokenizing component 130 may later be used by classifying component 110 in order to determine classifications or by analyzing component 120 to determine key-value pairs and relationships. In other embodiments, the server 102 may receive tokens from a computing device, such as computing device 104.

Classifying component 110 further includes machine learning models 112 and classifications 114. Machine learning models 112 may include one or more machine learning models, such as a Bidirectional Encoder Representations from Transformers (BERT) model and a classifier model. In some embodiments, the BERT model may be trained to use natural language processing in order to contextualize text of a document based on historical documents sent by the database 106. In those embodiments, the BERT model may receive extracted tokens from one or more documents sent by computing device 104 in order to contextualize the extracted tokens within each document.

In some embodiments, the classifier model of machine learning models 112 may be trained to classify one or more tokens of the extracted tokens by assigning a classification to each of the one or more tokens, such as a meaning or topic related to a token, based on the context of the token and associated historical classifications of tokens sent by database 106. In those embodiments, the classifier model may further classify tokens of the documents received from computing device 104 based on the context determined by the BERT model of machine learning models 112. Further, the classifications determined by the classifier model may later be used by the analyzing component in order to generate key-value pairs, and may also provide to the application 108, which may provide the classifications in response to a query. Tokens may be one or more characters, words, or symbols determined from the text of the historical documents or documents received from computing device 104.

Thus, classifying component 110 receives tokens associated with the documents and classifies the tokens. When classifying component 110 classifies the tokens, it may use classifications stored in classifications 114. In some cases, classifications 114 may be updated based on new documents or tokens, and the machine learning model 112 may be re-trained based on the updated classifications 114.

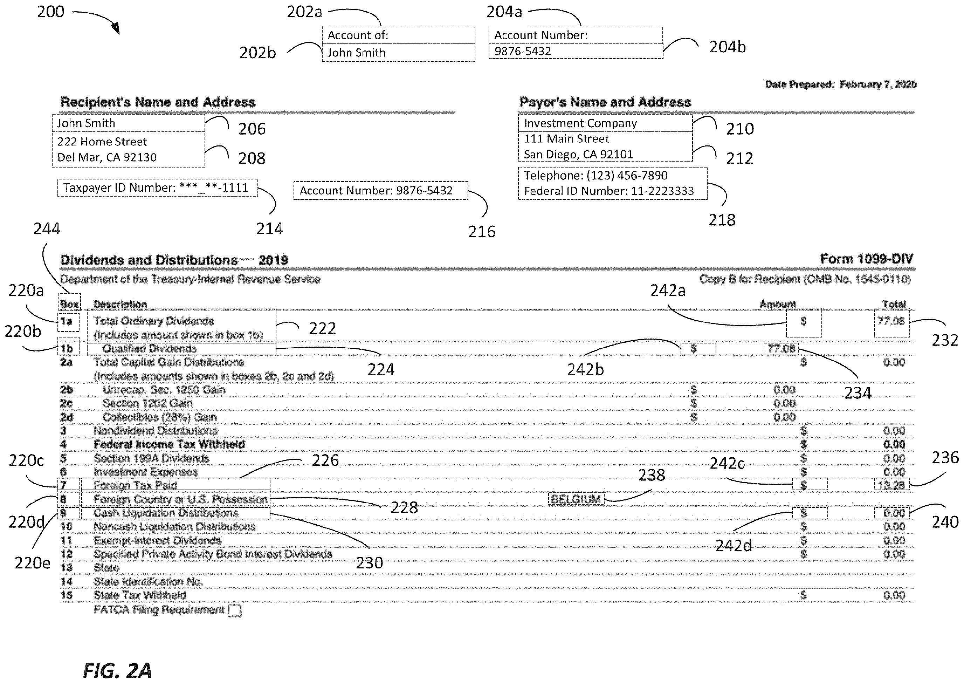

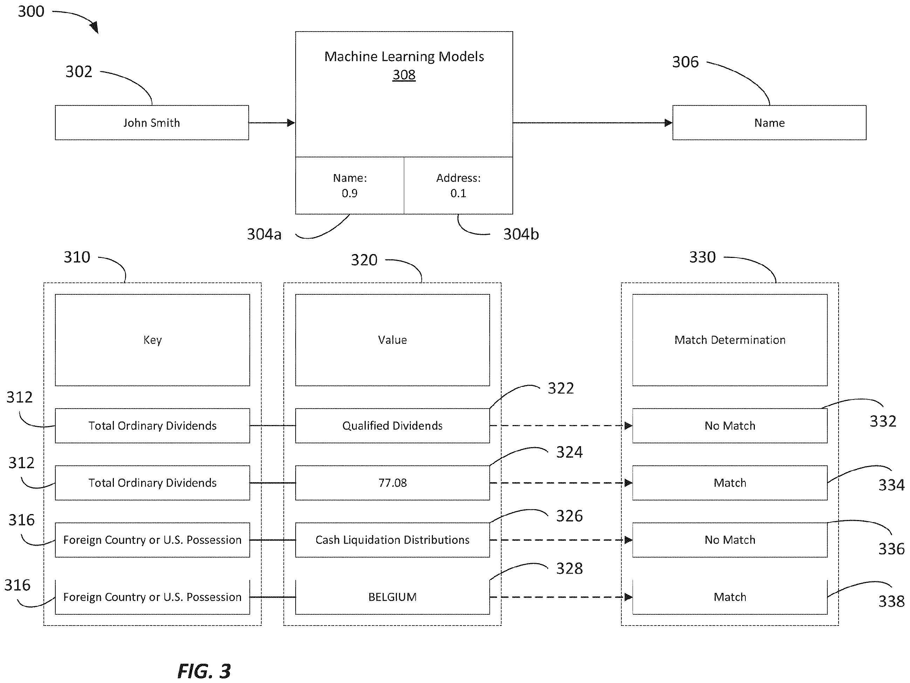

In this depicted example, analyzing component 120 further includes key-value pairs 122 and relationships 124. A key-value pair may be determined by analyzing component 120 based on documents received from computing device 104. Further, a key-value pair may include two related tokens from one or more documents, where the first token (the "key token") is determined by the analyzing component 120, and the second token (the "value token"), which is also determined by the analyzing component 120, is a token related to the key token. The value token may be determined to be related to key token based on a type of information contained by the value token matching of a type of expected information associated with a classification related to the key token and the key and the value tokens having a same positional coordinate, such as a horizontal or vertical coordinate on a document, as described further with respect to **FIGs. 2A** and **3****.** Such relationships between the tokens may be stored in relationships 124. A value token containing a type of expected information associated with a classification related to the key token may also be referred to as a "matched token". Further, the determination made by analyzing component 120 of whether the type of information held by the value token matches the type of expected information of the key token may be referred to as a "match determination" by the analyzing component 120, as described with respect to **FIG. 3****.** Key-value pairs 122 may include the key-value pairs determined by analyzing component 120, and may be updated with new key-value pairs as the analyzing component 120 analyzes new documents.

Relationships 124 similarly includes how the tokens of the key-value pair are related, such as if they are of the same or similar classifications, what types of expected information are associated with a token or classification, or if the key and value tokens both share a same positional coordinate, as described above. Note that in some cases a key token in a key-value pair may be a value token in another key-value pair. Further, determined key-value pairs from historical documents may be stored in key-value pairs 122.

Analyzing component 120 may form a key-value pair using only one token from the document and an assigned classification, as described further with respect to **FIG. 3****.** For example, a token may form key-value pairs with other tokens in a document, but none of those key-value pairs may be determined to be correct. In those cases, analyzing component 120 may use a classification of the token in order to create a key-value pair. Tokenizing component 130 may create a key token based on the classification, which analyzing component 120 may use to create a key-value pair that includes both the created key token and the token that previously did not form any correct key-value pairs.

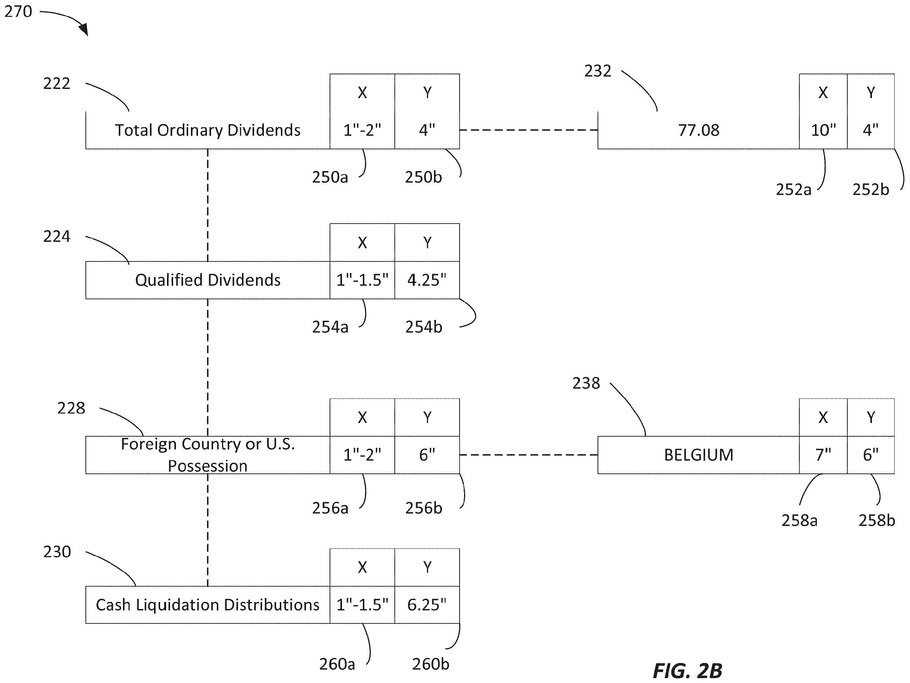

The analyzing component 120 further includes machine learning model 126 trained to make match determinations of which key-value pairs are correct based on the relationships of tokens within the key-value pairs. For example, the machine learning model, when receiving a key-value pair, may make a match determination indicating that the key-value pair is correct or incorrect based on how the key token and the value token of the key-value pair are related, as further described with respect to **FIG. 2****.**

After classifying component 110 classifies one or more tokens of the document and the analyzing component 120 determines one or more correct key-value pairs of the document, the server 102 sends the key-value pairs to application 108 one or more tokens contained in the key-value pairs as input to the fields of a document. As described above, in some embodiments, the key-value pairs may be used by an application on computing device 104. In those embodiments, the server 102 sends the classifications and key-value pairs to computing device 104, which may have a stored application that may use the classifications and tokens of the key-value pairs as inputs when filling out documents. In other embodiments, an application may be stored on the server 102 that may use the classifications and tokens of the key-value pairs to update received documents or input information to new documents, and may return the updated documents or new documents to the computing device 104. In one embodiment, the server 102 may send the classifications and key-value pairs to application 108, which may use the classifications and key-value pairs as input to fill out or update one or more documents, which may be provided to computing device 104. The server 102 may further send the determined classifications of tokens and relationships of key-value pairs to the database 106 to be referenced by the server 102 for future use.

Thus, when receiving a document with one or more tokens, the server 102 may determine one or more classifications for at least one of those tokens, and may further determine one or more key-value pairs of those token. After determining those classifications and key-value pairs, the server 102 may further determine which of the key-value pairs are correct or incorrect by determining if the information contained in the value token matches a type of information expected to be associated with the key token, and may send the classifications and the correct key-value pairs to a related application that may use the classifications and correct key-value pairs as input (e.g., information from a value token of a received key-value pair may be used to fill in fields of a separate document).

### Example Document with One or More Tokens

**FIG. 2A** depicts an example document 200 containing a plurality of tokens that may be classified and analyzed. In some embodiments, the classification and analysis may be performed by a server (e.g., server 102 of **FIG. 1****).**

As shown, the document 200 is a document that includes text that may be defined as a plurality of tokens. In some embodiments, the document 200 may include text that may be defined as only one token. Generally, any type of document may be used. For example, in other embodiments, the document 200 may be a document where tokens may be grouped by boxes, tables, or other forms of organization.

The information on document 200 may be extracted through a variety of methods. For example, optical character recognition (OCR) may be performed on the document 200 (e.g., by tokenizing component 130 of **FIG. 1****)** in order to extract the characters and determine one or more tokens from the characters. In other embodiments, a computing device (such as computing device 104 of **FIG. 1****)** that sent the document 200 may have performed OCR on the document 200 prior to sending the document, and send the extracted text to another device (e.g., server 102 of **FIG. 1****).** In yet another embodiment, only the tokens associated with the document 200 may be received.

Tokens may be determined based on the characters or words formed by the text as well as surrounding text. In some embodiments, the tokens may be further determined based on a contextualization of the text (e.g., by tokenizing component 130). For example, "Account" and "of:" may not contextually make sense as individual tokens, and may be combined into one token (e.g., token 202a). As another example, "John Smith" (as shown in token 206) and "222 Home Street" (as shown as part of token 208), which are directly above and below each other in the document, may not contextually make sense as a combined token, and thus would not be combined the text into one individual token.

Each token of the document 200 may be classified by a machine learning model (e.g., a classifier model of machine learning models 112 of **FIG. 1****)** based on the characters of the token. In some embodiments, not all tokens may be assigned a classification. For example, token 202 may be assigned a classification of "Account Holder", token 204 and 216 may be assigned a classification of "Account Number", tokens 206 and 210 may be assigned a classification of "Name", tokens 208 and 212 may be assigned classifications of "Address", token 214 may be assigned a classification of "ID" or "SSN" (or "Social Security Number"), and token 218 may be assigned a classification of "Contact Information". Tokens may further be assigned sub-classifications that further clarify what the classification refers to and to separate the token from other tokens with the same classification. For example, token 206 may be assigned a classification of "Name" with a sub-classification of "Account Holder", while token 210 may be assigned a classification of "Name" but with a sub-classification of "Company". In some embodiments, the classifications and sub-classifications may be stored in a database that may be referenced (e.g., classifications 114 of **FIG. 1****).**

A token may further be assigned a type indicating what information is associated with the token (e.g., text string, numerical value, or a symbol). For example, token 206 may be assigned the "text string" type, token 232 may be assigned the "numerical value" type, and token 242a may be assigned the "symbol" type. While "text string", "numerical value", and "symbol" are shown as types of information, those types are indicated by way of example and other types may be assigned.

Tokens of document 200 that are assigned classifications may also be associated with another token (e.g., token 222 may be classified as "Total Ordinary Dividends" and may be associated with a specific value of another token, such as token 232). The tokens that are determined to not be associated with another token (e.g., token 206 showing "John Smith" would not be associated with another token because all information needed for a name is within token 206) may be sent to an application along with a token based on the assigned classification as a key value pair, as described with respect to **FIG. 3****.** The tokens that are determined to be associated with another token may be analyzed in order to determine the associated tokens.

The server may determine that two tokens may be related based on positional coordinates associated with each token. For example, token 222 may be determined to be associated with tokens 224, 226, 228, 230, 220b, 242a, and 232 because token 222 shares a same or similar vertical or horizontal coordinate with each of tokens 224, 226, 228, 230, 220b, 242a, and 232. Thus, key-value pairs may be created based on the same or similar positional coordinates. For example, token 222 and token 224 may create a key-value pair based on a same vertical coordinate, while token 222 and 232 may create a key-value pair based on a same horizontal coordinate.

Key-value pairs may be determined to be either correct or incorrect based on whether a type of expected information associated with the key token matches a type of information held by the value token. For example, token 244 may form a key-value pair with token 220a as well as 220b, 220c, 220d, and 220e because token 244 shares a same or similar vertical coordinate as tokens 220a-220e. Token 244 may be labeled as the key token, and the type of expected information associated with token 244 may be a numerical value or a numeral followed by a letter. Since the type of information (e.g., numerical value) of contained in tokens 220a-220e all matches the type of expected information associated with token 244 (e.g., "box number"), each key-value pair between token 244 and tokens 220a-220e may be determined to be a correct key-value pair.

As another example, token 222 may form key-value pairs with tokens 220a, 242a, 232, and 224. Since token 222 shows "Total Ordinary Dividends", the type of expected information would be a numerical value, since an amount of dividends is typically a numerical value. However, the key-value pair formed with 220a would be considered incorrect because the type of information held by token 220a is a numeral followed by a letter, and thus, does not match the type of expected information (e.g., a numerical value) associated with the key token (e.g., token 222). Similarly, the key-value pairs formed with tokens 224 and 242a would be considered incorrect because the type of information contained by those tokens (e.g., a text string and a symbol, respectively) does not match the type of expected information associated with the key token. Instead, only the key-value pair formed between token 222 and token 232 would be considered correct because the type of information contained in token 232 is a numerical value, which matches the type of expected information associated with token 222.

In some embodiments, the tokens of document 200 are only determined to create key-value pairs with the tokens that are closest to them. For example, in those embodiments, token 228 would only form key-value pairs with tokens 220d, 226, 230, and 238. Further, in other embodiments, key-value pairs with tokens that are not assigned a classification associated with a type of expected information will not be created. Thus, as an example in those embodiments, token 226 would create key-value pairs with tokens 220c and 228, but would not form a key-value pair with token 242c, and would instead form a key-value pair with token 236.

As described above, certain tokens of document 200 may not be assigned a classification and may not be a part of a key-value pair determined because the token contains information that is not associated with any particular classification or another token. For example, tokens 242a-242d only contain a single dollar sign, which may not be assigned a classification, and thus may also be determined to not be associated with any other tokens. While a dollar sign is shown in tokens 242a-242d, a dollar sign is indicated by way of example and other information in tokens may not be assigned a classification by the server. In addition, on some documents, dollar signs or other symbols may be assigned a classification (e.g., a classification of how expensive a restaurant may be) in other documents.

Further, in some cases, a token may be assigned a classification, but may not form a correct key-value pair with any other tokens in the document. In those cases, a key-value pair may still be generated based on the assigned classification, as further described with respect to **FIG. 3****.**

**FIG. 2B** depicts pairings 270 showing tokens being paired based on their positional coordinates in a document (e.g., document 200 of **FIG. 2A****).**

As shown, each of extracted tokens 222, 224, 228, 230, 232, and 238 are associated with a horizontal coordinate 250a, 252a, 254a, 256a, 258a, and 260a, respectively, and a vertical coordinate 250b, 252b, 254b, 256b, 258b, and 260b, respectively, where the coordinates are determined by the position of the token within the document. As described above, key-value pairs of tokens may be generated based on same or similar coordinates.

For example, token 222 may form a respective key-value pair with each of tokens 224 and 232. Token 222 is associated with horizontal coordinate 250a, which shows a 1"-2" coordinate, and token 224 is associated with horizontal coordinate 254a, which shows a 1"-1.5" coordinate. While horizontal coordinates 250a and 254a do not have the exact same value, their values overlap and thus may be considered similar. Thus, tokens 222 and 224 may form a key-value pair based on their similar horizontal coordinates 250a and 254a. Additionally, token 222 is associated with vertical coordinate 250b, which shows a 4" coordinate, and token 232 is associated with vertical coordinate 252b, which shows a 4" coordinate. The horizontal coordinates 250b and 252b have the same value, and thus, tokens 222 and 232 may also form a key-value pair because their associated horizontal coordinates are the same.

Similarly, token 228 may form a respective key-value pair with each of tokens 230 and 238. Token 228 is associated with horizontal coordinate 256a, which shows a 1"-2" coordinate, and token 230 is associated with horizontal coordinate 260a, which shows a 1"-1.5" coordinate. Again, horizontal coordinates 256a and 260a do not have the same exact value but their values do overlap, and thus, may be considered similar. Therefore, tokens 228 and 230 may form a key-value pair based on their similar horizontal coordinates 256a and 260a. Also, tokens 228 and 238 may form a key-value pair because their associated vertical coordinates, 256b and 258b both have the same value of 6".

Thus, based on their coordinates, tokens 222 and 224 form a key-value pair, tokens 222 and 232 form a key-value pair, tokens 228 and 230 form a key-value pair, and tokens 228 and 238 form a key-value pair. Each of those key-value pairs may later be determined to be correct or incorrect, as described further with respect to **FIG. 3****.** Further, the correct pairs may later be used by an application in order to update a document or fill in information of another document.

Additionally, while the key-value pairs described above are described for simplicity, other key-value pairs may be formed. For example, tokens 222, 224, 228, and 230 all have the same or similar horizontal values, and thus, any two of those tokens may form a key-value pair.

Further, a machine learning model (e.g., machine learning model 126 of **FIG. 1****)** may generate the key-value pairs and may further use parameters in order to determine which key-value pairs should be generated. For example, a parameter may define what should be considered "similar coordinates". As described above, "similar coordinates" may be defined as coordinates that overlap at all. "Similar coordinates" may also be defined as coordinates that share a 50% similarity or another similarity percentage, or may also be defined as coordinates within a certain threshold of each other (e.g., 6" and 6.25" could be considered similar). Additionally, another parameter may define when tokens that are significantly separated should form a key-value pair. For example, while a key-value pair could be formed between tokens 222 and 230 based on their similar coordinates, at least two other tokens (e.g., tokens 224 and 228) are between tokens 222 and 230, which indicates that tokens 222 and 230 may not be related and therefore, a key-value pair should not be formed between them.

While tokens 222, 224, 228, 230, 232, and 238 are the only tokens depicted in **FIG. 2B****,** they are depicted for simplicity, and key-value pairs may be generated for all tokens within a document (e.g., document 200).

### Example Assigning of Classifications and Determining Correct Key-value pairs

**FIG. 3** depicts an example process of assigning classifications to tokens of a document (e.g., document 200 of **FIG. 2****)** and determining correct key-value pairs.

As described with respect to **FIG. 2****,** a document containing one or more tokens may be received. The one or more tokens in the document may be assigned classifications (e.g., by classifying component 110 of **FIG. 1****)** and may form key-value pairs with other tokens (e.g., by analyzing component 120). The classifications and key-value pairs may later be provided to an application that may update information within documents or fill in new documents based on the classifications and key-value pairs.

In this depicted example, the classification for a token is determined by machine learning models 308. In some embodiments, the machine learning models 308 may be the machine learning models 112 and machine learning model 126 of **FIG. 1****.** The machine learning model 308 may predict the classification for each token by determining probabilities of one or more classifications that the token could be associated with and choosing the classification with the highest probability. For example, a token 302 (e.g., "John Smith") may be received by the machine learning models 112, and the machine learning models 112 may determine one or more probabilities indicating which classifications may be assigned to the token 302, and may output an assigned classification based on those one or more probabilities. If a first token is determined to have no correct key-value pairs, a token associated with the classification may be created as a key token, and the key token created from the classification and the first token will be considered a correct key-value pair, as described further below.

In this depicted example, the machine learning models 308 may predict that the plurality of classifications that the token may be assigned to include classification 304a ("Name") and classification 304b ("Address), and determine that the token 302 has a 90% (0.9) probability of being associated with the "Name" classification and a 10% (0.1) probability of being associated with the "Address" classification. Thus, since the "Name" classification is associated with the highest probability, the machine learning models 308 choose classification 306 ("Name") to assign to the token 302, and the token 302 and classification 306 may be provided to an application (e.g., application 108 of **FIG. 1****)** that may use them. For example, when receiving a new associated document, the application may input "John Smith" into a field titled "Name" based on the assigned classification.

One or more key-value pairs from tokens of the received document may be determined by a machine learning model (e.g., machine learning model 126), as described with respect to FIG. 2. Those key-value pairs may also be determined to be correct or incorrect by the machine learning model using key tokens 310, value tokens 320, and matches 330. For example, if a value associated with one of the value tokens of a key-value pair matches the type of expected information associated with the key token of the same key-value pair, the key-value pair may be determined to be correct. For example, as described with respect to **FIG. 2****,** tokens that share a horizontal coordinate or a vertical coordinate may be designated as a key-value pair. Thus, based on those shared coordinates, one or more key-value pairs, such as, in this depicted example, a key-value pair of tokens 312 and 322, a key-value pair of tokens 312 and 324, a key-value pair of tokens 316 and 326, and a key-value pair of tokens 316 and 328, may be generated. Further, in this depicted example, tokens 312 and 322 share a same vertical coordinate, while tokens 316 and 326 share a same vertical coordinate. Similarly, in this depicted example, tokens 314 and 324 share a same horizontal coordinate, while tokens 318 and 328 also share a same horizontal coordinate.

Each key-value pair may be determined to be a correct key-value pair or an incorrect key-value pair based on if the value token of each key-value pair contains information matching a type of expected information associated with the key token of that key-value pair. For example, key token 312 ("Total Ordinary Dividends") may have a numerical value as its associated type of expected information. Thus, since the value token 322 of the key-value pair contains "Qualified Dividends", which is not a numerical value, it does not match the associated type of expected information of key token 312. Thus, a match determination 332 of the key-value pair of key token 312 and value token 322 indicates that the two tokens do not match based on not matching the type of expected information, and therefore, the key-value pair is determined to be incorrect. As described above with respect to **FIG. 1****,** a value token that matches the associated type of expected information may also be referred to as a "matched token".

Similarly, the key-value pair of key token 312 and value token 324 is evaluated to determine if that key-value pair is correct. For example, as described above, key token 312 may have a numerical value as its associated type of expected information. Thus, since the value token 324 of the key-value pair contains "77.08", which is a numerical value, it matches the associated type of expected information of key token 312. Thus, a match determination 334 of the key-value pair of key token 312 and value token 324 indicates that the two tokens match based on matching the type of expected information, and therefore, the key-value pair is determined to be correct.

Additionally, the type of expected information for a key token may restrict the expected information further than just whether the information of a token is a text string, symbol, or a numerical value. For example, the type of expected information may be restricted to a numerical value within a specific range of numbers (e.g., 0.0 to 1,000.0) or a specific set of words or phrases (e.g., names of countries). In this depicted example, key token 316 may have a text string as its associated type of expected information. Thus, since value token 326 contains "Cash Liquid Distributions", it matches the associated type of expected information of key token 316. However, the associated type of expected information of key token 316 may be further restricted to geographical, state, or country names, which "Cash Liquid Distributions" does not fit into. Thus, a match determination 336 of the key-value pair of key token 316 and value token 326 indicates that the type of information held by the value token does not match the type of expected information associated with the key token, and therefore, the key-value pair is determined to be incorrect.

Similarly, the key-value pair of key token 316 and value token 328 is evaluated to determine if the key-value pair is correct. For example, as described above key token 316 may have a text string as its associated type of expected information, which may be further limited to geographical, state, or country names. Thus, since the value token 328 of the key-value pair contains "BELGIUM", which is a text string limited to a country name, it matches the associated type of expected information of key token 316. Thus, a match determination 338 of the key-value pair of key token 316 and 328 indicates that the two tokens match, and therefore, the key-value pair is correct.

In some embodiments, a machine learning model of machine learning models 308 to determine a type of expected information for a key token based on the classification assigned to the key token. The machine learning model may be trained using historical forms and the key tokens, value tokens, and types of expected information associated with the key tokens of the historical forms.

In addition, a token may be a part of more than one correct key-value pair. For example, if another token containing "FINLAND" shared a same coordinate with key token 316, it could create another correct key-value pair with key token 316 based on the associated type of expected information.

In some embodiments, more than one value token associated with a key token may match the type of expected information associated with the key token. In those embodiments, it may be determined that all of or a portion of the key-value pairs formed from those tokens are correct key-value pairs. In those embodiments, a "best" key-value pair may be designated based on each value token and the type of expected information.

Tokens that are assigned classifications, but do not form a correct key-value pair with other tokens in the document may still form a correct key-value pair. For example, as described above, if token 302 did not form a correct key-value pair with any other token of the document, a key-value pair including token 302 may be created based on the classification 306 assigned to token 302. In those cases, a key token based on the classification 306 would be generated, so that token 302 and the key token based on classification 306 would be determined to be a correct key-value pair, which could be provided to an application or user.

The machine learning models 308 may be trained to classify tokens based on tokens contained in historical documents that may be received and classifications associated with those tokens. In addition, the machine learning models may be able to access a plurality of classifications (e.g., classifications 114 of **FIG. 1****)** and use the plurality of classifications when assigning classifications to tokens.

Thus, after receiving tokens from a document, classifications may be assigned to the tokens based on probabilities that the token is associated with a plurality of classifications, and may also determine correct key-value pairs that may be provided to an application that may receive the correct key-value pairs as input.

### Example Method of Assigning Classifications and Generating Correct Key-Value pairs

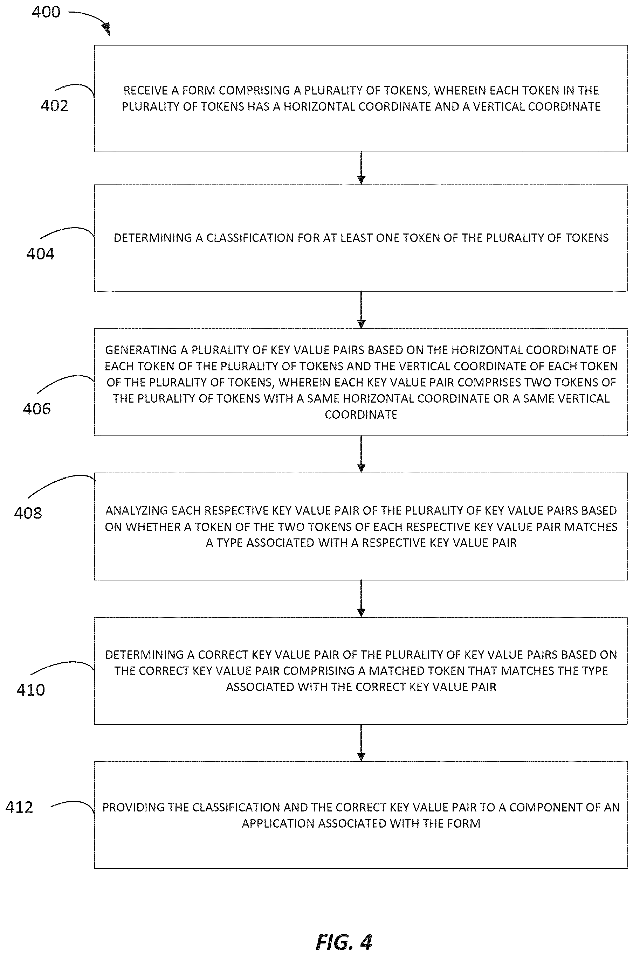

**FIG. 4** depicts an example method 400 of assigning classifications to tokens (e.g., the tokens of document 200) and generating correct key-value pairs. The method 400 may be performed by a server (e.g., server 102 of **FIG. 1****),** which may receive one or more documents containing the tokens from a computing device (e.g., computing device 104 of **FIG. 1****).**

Method 400 begins at step 402 with receiving a document comprising a plurality of tokens, where each token of the plurality of tokens has positional coordinates within the document, such as a horizontal coordinate and vertical coordinate. The tokens may include any combination of text, numerical values, symbols, or other characters within the document. In some embodiments, the plurality of tokens by determined by performing OCR on the document. In other embodiments, a machine learning model (e.g., of machine learning models 112 of **FIGs. 1** and **4****)** may be used in order to determine the plurality of tokens. In one embodiment, the plurality of tokens may be received from an associated computing device.

Method 400 then proceeds to step 404 with determining a classification for at least one token of the plurality of tokens. In some embodiments, the tokens may be contextualized by using a machine learning model, such as a BERT model. The classifications may be predicted by using a machine learning model, such as a classifier model, based at least in part on the context surrounding the tokens. The classifier may further be trained to predict classifications based on historical classifications provided by or retrieved from a database, such as database 106 of **FIG. 1****.** The classifications may further be assigned based on probabilities associated with each classification indicating how likely a token is associated with the classification, and the classification associated with the highest probability may be assigned to the token. In some cases, a token may not be assigned a classification based on the information associated with the token. For example, in some embodiments, a token containing a symbol, such as a dollar sign, may not be assigned a classification based on the context surrounding the token.

Method 400 then proceeds to step 406 with generating a plurality of key-value pairs based on the tokens. In some embodiments, the key-value pairs may be generated based on the positional coordinates of each token, where each token has a horizontal coordinate and a vertical coordinate. For example, a token may form a key-value pair with another token with the same or similar horizontal coordinate, and may also form a key-value pair with another token with the same or similar vertical coordinate. In one embodiment, a key-value pair may include more than two tokens based on a context surrounding the tokens.

Method 400 then proceeds to step 408 with analyzing each respective key-value pair of the plurality of key-value pairs based on if the value token of the key-value pair contains a type of expected information associated with the key token of the key-value pair. For example, a key token of "Foreign Tax Paid" (e.g., as shown by token 226 of **FIG. 2****)** would match a value token of "13.28" (as shown by token 236 of **FIG. 2****),** with the same horizontal coordinate, because a type of expected information associated with "Foreign Tax Paid" would be a numerical value. For the same reason, the key token of "Foreign Tax paid" would not match a value token of "Foreign Country or U.S. Possession" (as shown by token 228 of **FIG. 2****),** with the same vertical coordinate, because the text string contained in the token would not match the type of expected information (e.g., a numerical value). In some embodiments, the type of expected information may be limited further by each classification. For example, instead of just a text string or a numerical value, the type of expected information may be limited to specific text strings (e.g., a geographical, state, or country name) or a numerical value within a specific range (e.g., values above 0 or between 100 and 200).

Method 400 then proceeds to step 410 with determining a correct key-value pair of the plurality of key-value pairs based on the value tokens containing information that matches the type of expected information associated with the key value. For example, as described above, the key token of "Foreign Tax Paid" would match the value token of"13.28" because 13.28 is a numerical value, and therefore, the key-value pair of those tokens would be determined to be correct by a machine learning model. As described above with respect to **FIGs. 1** and **3****,** the value token that contains information matching the type of expected information associated with the key value may be referred to as a "matched token". In some embodiments, the key-value pair may only be determined to be correct based on other requirements. For example, the key-value pair may only be determined to be correct if the information contained by value token matches the type of expected information and also shares the same horizontal coordinate as the key token, as opposed to the same vertical coordinate.

Method 400 then proceeds to step 412 with providing the classification and the correct key-value pair to a component of an application associated with the document. The component of the application may use the tokens to input information to another document or update the document based on the information associated with the tokens.

In some embodiments, a token in the document may form a key-value pair with a token that is not in the document based on a classification associated with the token in the document. For example, a token of "John Smith" (e.g., token 206 of **FIG. 2****)** may not form a correct key-value pair with another token in the document. However, the machine learning model may predict that the classification of "John Smith" is "Name", which is not a token present in the document. Thus, the machine learning model may generate a key-value pair where the classification ("Name") is the key token and "John Smith" is the value token, which would form a correct key-value pair because "John Smith" would match the type of expected information associated with a key token of "Name". The key-value pair of the "Name" and "John Smith" tokens would then be provided to the component of the application, even though "John Smith" was the only token of the key-value pair in the document.

In some cases, the correct key-value pairs and classifications may be provided to a user associated with the document so that the user may use the key-value pairs and classifications. The user may be associated with his or her own computing device.

### Example Processing Device for Assigning Classifications and Generating Correct Key-Value Pairs

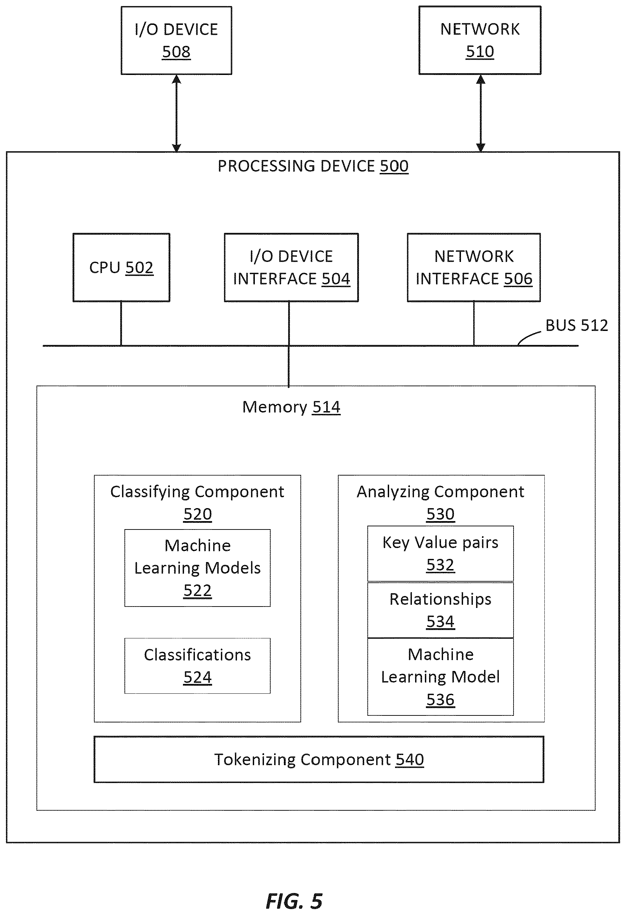

**FIG. 5** depicts an example processing device 500 that may be configured to perform the methods described herein, such as method 400 described with respect to **FIG. 4****.** In various embodiments, the processing device 500 can be a physical processing device, while in other embodiments, the processing device may be a virtual (e.g., cloud) processing device (e.g., a virtual machine operating in a cloud service infrastructure).

In this example, processing device 500 includes a central processing unit (CPU) 502 connected to a data bus 512. CPU 502 is configured to process computer-executable instructions, e.g., stored in memory 514, and to cause the processing device 500 to perform methods described herein, for example, with respect to **FIG. 4****.** CPU 502 is included to be representative of a single CPU, multiple CPUs, a single CPU having multiple processing cores, and other documents of processing architecture capable of executing computer-executable instructions.

Processing device 500 further includes input/output (I/O) device(s) 508 and I/O device interfaces 504, which allows processing device 500 to interface with input/output devices 508, such as, for example, keyboards, displays, mouse devices, pen input, and other devices that allow for interaction with processing device 500. Note that processing device 500 may connect with external I/O devices through physical and wireless connections (e.g., an external display device).

Processing device 500 further includes a network interface 506, which provides processing device 500 with access to external network 510 and thereby external personal devices, such as computing device 104 of **FIG. 1****.**

Processing device 500 further includes memory 514, which in this example includes classifying component 520, analyzing component 530, and tokenizing component 540.

In this depicted embodiment, tokenizing component 540 may generate tokens based on a received document. In some embodiments, the tokenizing component 540 generates the tokens based on performing OCR on the received document.

In this depicted embodiment, the classifying component 520 further includes machine learning models 522 and classifications 524. Machine learning models 522 may include one or more machine learning models that may be trained based on historical documents and the tokens contained in those documents. The machine learning models 522 may be trained to predict classifications to tokens of a received document. In some cases, a machine learning model of machine learning models 522 may be trained to assign those classifications by determining a probability that a token is associated with each of a plurality of classifications and predicting that the token is associated with a classification that has the highest probability. Classifications 524 may store the classifications assigned to tokens and may be accessed in order to determine an appropriate classification to assign to a token.

Analyzing component 530 further includes key-value pairs 532, relationships 534, and machine learning model 536. Analyzing component 530 may determine key-value pairs of the tokens from a received document (e.g., document 200 of **FIG. 2****).** The analyzing component 530 may further determine which of those key-value pairs are correct key-value pairs and which are incorrect key-value pairs. Key-value pairs 532 may store the key-value pairs determined by analyzing component as well as match determinations indicating whether each key-value pair is correct or not. Additionally, relationships 534 may include relationships between the tokens of historical documents and may be updated with new relationships from received documents. Machine learning model 536 may determine which key-value pairs are considered correct based on the relationships of tokens within those key-value pairs (e.g., whether the type of information of one token matches the type of expected information associated with another token).

Note that while shown as a single memory 514 in **FIG. 5** for simplicity, the various aspects stored in memory 514 may be stored in different physical memories, but all accessible by CPU 502 via internal data connections such as bus 512. While not depicted, other aspects may be included in memory 514.

### Example Clauses

Therefore, from one perspective, there have been described techniques for extracting information, including receiving a document comprising a plurality of tokens, wherein each token is associated with position coordinates; determining a classification for at least one token; generating a plurality of key-value pairs based on the positional coordinates; analyzing each respective key-value pair of the plurality of key-value pairs based on whether a token of the two tokens of each respective key-value pair matches a type associated with the respective key-value pair; determining a correct key-value pair of the plurality of key-value pairs based on the correct key-value pair comprising a matched token that matches the type associated with the correct key-value pair; and providing the classification and the correct key-value pair to a component of an application associated with the document.

Implementation examples are described in the following numbered clauses:
Clause 1: A method for extracting information, comprising: receiving a document comprising a plurality of tokens, wherein each token in the plurality of tokens has a horizontal coordinate and a vertical coordinate; determining a classification for at least one token of the plurality of tokens; generating a plurality of key-value pairs based on the horizontal coordinate of each token of the plurality of tokens and the vertical coordinate of each token of the plurality of tokens, wherein each key-value pair comprises two tokens of the plurality of tokens with a same horizontal coordinate or a same vertical coordinate; analyzing each respective key-value pair of the plurality of key-value pairs based on whether a token of the two tokens of each respective key-value pair matches a type associated with the respective key-value pair; determining a correct key-value pair of the plurality of key-value pairs based on the correct key-value pair comprising a matched token that matches the type associated with the correct key-value pair; and providing the classification and the correct key-value pair to a component of an application associated with the document.
Clause 2: The method of Clause 1, further comprising: identifying a set of tokens of the plurality of tokens, wherein each token of the set of tokens is of a same type, wherein generating the plurality of key-value pairs is further based on the identifying and the key-value pairs do not comprise tokens of the set of tokens.
Clause 3: The method of any one of Clauses 1-2, further comprising: determining that the matched token comprises a numerical value within a range, wherein determining the correct key-value pair is further based on the matched token comprising the numerical value within the range.
Clause 4: The method of any one of Clauses 1-3, wherein analyzing the plurality of key-value pairs comprises: determining a first key-value pair of the plurality of key-value pairs and a second key-value pair of the plurality of key-value pairs, wherein a first token is common to the first key-value pair and the second key-value pair; determining that a second token of the first key-value pair comprises a same horizontal coordinate as the first token; determining that a third token of the second key-value pair comprises a same vertical coordinate as the first token; and determining that one of the second token or the third token matches the type associated with the first token, wherein the correct key-value pair comprises the first token and the one of the second token or the third token that matches the type associated with the first token.
Clause 5: The method of Clause 4, wherein the one of the second token or the third token is the matched token.
Clause 6: The method of any one of Clauses 1-5, wherein, the matched token is associated with a determined classification associated with the type, and determining the correct key-value pair of the plurality of key-value pairs is further based on the determined classification being associated with the type.
Clause 7: The method of any one of Clauses 1-6, wherein determining the classification for the at least one token of the plurality of tokens from the document comprises predicting, by a machine learning model, that the at least one token is associated with the classification.
Clause 8: The method of Clause 7, wherein predicting, by the machine learning model, that the at least one token is associated with the classification comprises: determining a probability that each token of the plurality of tokens belongs to each respective classification of a plurality of classifications; and matching each token of the at least one token to a classification of the plurality of classifications based on a highest probability.
Clause 9: The method of any one of Clauses 1-8, further comprising determining whether each token of the plurality of tokens is associated with another token, wherein determining the classification for the at least one token of the plurality of tokens from the document comprises predicting a classification for each token of the plurality of tokens that is not associated with another token.
Clause 10: The method of any one of Clauses 1-9, wherein the two tokens of each key-value pair comprise at least one token that comprises a text string.
Clause 11: The method of any one of Clauses 1-10, further comprising providing the classification and the correct key-value pair to a user.
Clause 12: A processing system, comprising: a memory comprising computer-executable instructions; one or more processors configured to execute the computer-executable instructions and cause the processing system to perform a method in accordance with any one of Clauses 1-11.
Clause 13: A processing system, comprising means for performing a method in accordance with any one of Clauses 1-11.
Clause 14: A transitory or non-transitory computer-readable medium comprising computer-executable instructions that, when executed by one or more processors of a processing system, cause the processing system to perform a method in accordance with any one of Clauses 1-11.
Clause 15: A computer program product embodied on a computer-readable storage medium comprising code for performing a method in accordance with any one of Clauses 1-11.
Clause 16. A method for extracting information, comprising: receiving a document comprising a plurality of tokens, wherein each token in the plurality of tokens has a horizontal coordinate and a vertical coordinate; generating a plurality of key-value pairs based on the horizontal coordinate of each token of the plurality of tokens and the vertical coordinate of each token of the plurality of tokens, wherein each key-value pair comprises two tokens of the plurality of tokens with a same horizontal coordinate or a same vertical coordinate; determining a correct key-value pair of the plurality of key-value pairs comprising a key token and a value token based on the value token matching a type of expected information associated with the key token, wherein the type of expected information is determined based on a classification of the key token; and providing the classification and the correct key-value pair to a component of an application associated with the document.
Clause 17. The method of clause 16, further comprising: identifying a set of tokens of the plurality of tokens, wherein each token of the set of tokens is of a same type, wherein generating the plurality of key-value pairs is further based on the identifying and the key-value pairs do not comprise tokens of the set of tokens.
Clause 18. The method of clause 16 or 17, further comprising: determining that the value token comprises a numerical value within a range, wherein determining the correct key-value pair is further based on the value token comprising the numerical value within the range.
Clause 19. The method of clause 16, 17 or 18, further comprising: determining a first key-value pair of the plurality of key-value pairs and a second key-value pair of the plurality of key-value pairs, wherein a first token is common to the first key-value pair and the second key-value pair; determining that a second token of the first key-value pair comprises a same horizontal coordinate as the first token; determining that a third token of the second key-value pair comprises a same vertical coordinate as the first token; and determining that one of the second token or the third token matches the type of expected information.
Clause 20. The method of clause 19, wherein the first token is the key token and the one of the second token or the third token is the value token.
Clause 21. The method of any of clauses 16 to 20, further comprising determining a classification for at least one token of the plurality of tokens, wherein the at least one token of the plurality of tokens comprises the key token.
Clause 22. The method of clause 21, wherein determining the classification for the at least one token of the plurality of tokens comprises predicting, by a machine learning model, that the at least one token is associated with the classification.
Clause 23. The method of clause 22, wherein predicting, by the machine learning model, that the at least one token is associated with the classification comprises: determining a probability that each token of the plurality of tokens belongs to each respective classification of a plurality of classifications; and matching each token of the at least one token to the classification based on a highest probability.
Clause 24. The method of clause 21, 22 or 23, further comprising determining whether each token of the plurality of tokens is associated with another token, wherein determining the classification for the at least one token of the plurality of tokens from the document comprises predicting a classification for each token of the plurality of tokens that is not associated with another token.
Clause 25. The method of any of clauses 16 to 24, wherein the two tokens of each key-value pair comprise at least one token that comprises a text string.
Clause 26. The method of any of clauses 16 tp 25, further comprising providing the classification and the correct key-value pair to a user.
Clause 27. A processing system, comprising: a memory storing executable instructions; and a processor configured to execute the executable instructions and cause the processing system to: receive a document comprising a plurality of tokens, wherein each token in the plurality of tokens has a horizontal coordinate and a vertical coordinate; generate a plurality of key-value pairs based on the horizontal coordinate of each token of the plurality of tokens and the vertical coordinate of each token of the plurality of tokens, wherein each key-value pair comprises two tokens of the plurality of tokens with a same horizontal coordinate or a same vertical coordinate; determine a correct key-value pair of the plurality of key-value pairs comprising a key token and a value token based on the value token match a type of expected information associated with the key token, wherein the type of expected information is determined based on a classification of the key token; and provide the classification and the correct key-value pair to a component of an application associated with the document.
Clause 28. The processing system of clause 27, wherein the processor is further configured to cause the processing system to identify a set of tokens of the plurality of tokens, wherein each token of the set of tokens is of a same type, wherein the key-value pairs do not comprise tokens of the set of tokens.
Clause 29. The processing system of clause 27 or 28, wherein the processor is further configured to cause the processing system to: determine that the value token comprises a numerical value within a range, wherein the correct key-value pair is determined further based on the value token comprising the numerical value within the range.
Clause 30. The processing system of clause 27, 28 or 29, wherein the processor is further configured to cause the processing system to: determine a first key-value pair of the plurality of key-value pairs and a second key-value pair of the plurality of key-value pairs, wherein a first token is common to the first key-value pair and the second key-value pair; determine that a second token of the first key-value pair comprises a same horizontal coordinate as the first token; determine that a third token of the second key-value pair comprises a same vertical coordinate as the first token; and determine that one of the second token or the third token matches the type of expected information.
Clause 31. The processing system of any of clauses 27 to 30, wherein the processor is further configured to cause the processing system to determine a classification for at least one token of the plurality of tokens, wherein the at least one token of the plurality of tokens comprises the key token.
Clause 32. The processing system of clause 31, wherein the processor being configured to cause the processing system to determine the classification for the at least one token of the plurality of tokens from the document comprises the processor being configured to cause the processing system to predict, by a machine learning model, that the at least one token is associated with the classification.
Clause 33. The processing system of clause 32, wherein the processor being configured to cause the processing system to predict, by the machine learning model, that the at least one token is associated with the classification comprises the processor being configured to cause the processing system to: determine a probability that each token of the plurality of tokens belongs to each respective classification of a plurality of classifications; and match each token of the at least one token to the classification based on a highest probability.
Clause 34. The processing system of any of clauses 31 to 33, wherein: the processor is further configured to determine whether each token of the plurality of tokens is associated with another token, and the processor being configured to cause the processing system to determine the classification for the at least one token of the plurality of tokens comprises the processor being configured to cause the processing system to predict a classification for each token of the plurality of tokens that is not associated with another token.
Clause 35. A method for extracting information, comprising: receiving a document comprising a plurality of tokens, wherein each token in the plurality of tokens has a horizontal coordinate and a vertical coordinate; determining a classification for each token of the plurality of tokens; generating a plurality of key-value pairs based on the horizontal coordinate of each token of the plurality of tokens and the vertical coordinate of each token of the plurality of tokens, wherein each key-value pair comprises two tokens of the plurality of tokens with a same horizontal coordinate or a same vertical coordinate; determining a first correct key-value pair of the plurality of key-value pairs based on the first correct key-value pair comprising a matched token that matches a type associated with the first correct key-value pair; determining an incorrect key-value pair of the plurality of key-value pairs based on the incorrect key-value pair comprising a token that does not match the type associated with the first correct key-value pair; identifying a first token of the plurality of tokens that is not associated with a correct key-value pair; generating a second correct key-value pair based on the first token and a classification assigned to the first token; and providing the first correct key-value pair and the second correct key-value pair to a component of an application associated with the document.

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, the word "exemplary" means "serving as an example, instance, or illustration." Any aspect described herein as "exemplary" is not necessarily to be construed as preferred or advantageous over other aspects.

As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Software for causing programmable hardware to become configured in accordance with the methods disclosed herein may be conveyed for execution by such programmable hardware using a computer-readable medium. A computer readable medium, comprising instructions (sometime referred to as code) for causing processors or other processing elements of programmable hardware (such as a processing system) may be provided by way of a computer-readable storage medium and/or a computer readable transmission medium. A computer readable storage medium (which may be termed non-transitory) may be used to store instructions, for example in a memory device such as a magnetic disk, optical disc, solid state electric storage or the like. A computer readable transmissions medium may be used to carry instructions between components of a single computer system (such as over a memory bus) and/or between plural separate computer systems (such as over a network connection) and may take the form of a carrier wave, transmissions signal or the like.

Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A method for extracting information, comprising:
receiving a document comprising a plurality of tokens, wherein each token in the plurality of tokens has a horizontal coordinate and a vertical coordinate;
generating a plurality of key-value pairs based on the horizontal coordinate of each token of the plurality of tokens and the vertical coordinate of each token of the plurality of tokens, wherein each key-value pair comprises two tokens of the plurality of tokens with a same horizontal coordinate or a same vertical coordinate;
determining a correct key-value pair of the plurality of key-value pairs comprising a key token and a value token based on the value token matching a type of expected information associated with the key token, wherein the type of expected information is determined based on a classification of the key token; and
providing the classification and the correct key-value pair to a component of an application associated with the document.

2. The method of Claim 1, further comprising:
identifying a set of tokens of the plurality of tokens,
wherein each token of the set of tokens is of a same type, wherein generating the plurality of key-value pairs is further based on the identifying and the key-value pairs do not comprise tokens of the set of tokens.

3. The method of Claim 1 or 2, further comprising:
determining that the value token comprises a numerical value within a range,
wherein determining the correct key-value pair is further based on the value token comprising the numerical value within the range.

4. The method of Claim 1, 2 or 3, further comprising:
determining a first key-value pair of the plurality of key-value pairs and a second key-value pair of the plurality of key-value pairs, wherein a first token is common to the first key-value pair and the second key-value pair;
determining that a second token of the first key-value pair comprises a same horizontal coordinate as the first token;
determining that a third token of the second key-value pair comprises a same vertical coordinate as the first token; and
determining that one of the second token or the third token matches the type of expected information.

5. The method of Claim 4, wherein the first token is the key token and the one of the second token or the third token is the value token.

6. The method of any preceding Claim, further comprising determining a classification for at least one token of the plurality of tokens, wherein the at least one token of the plurality of tokens comprises the key token.

7. The method of Claim 6, wherein determining the classification for the at least one token of the plurality of tokens comprises predicting, by a machine learning model, that the at least one token is associated with the classification.

8. The method of Claim 7, wherein predicting, by the machine learning model, that the at least one token is associated with the classification comprises:
determining a probability that each token of the plurality of tokens belongs to each respective classification of a plurality of classifications; and
matching each token of the at least one token to the classification based on a highest probability.

9. The method of Claim 6, 7 or 8, further comprising determining whether each token of the plurality of tokens is associated with another token, wherein determining the classification for the at least one token of the plurality of tokens from the document comprises predicting a classification for each token of the plurality of tokens that is not associated with another token.

10. The method of any preceding Claim, wherein the two tokens of each key-value pair comprise at least one token that comprises a text string.

11. The method of any preceding Claim, further comprising providing the classification and the correct key-value pair to a user.

12. A processing system, comprising:
a memory storing executable instructions; and
a processor configured to execute the executable instructions and cause the processing system to:
receive a document comprising a plurality of tokens, wherein each token in the plurality of tokens has a horizontal coordinate and a vertical coordinate;
generate a plurality of key-value pairs based on the horizontal coordinate of each token of the plurality of tokens and the vertical coordinate of each token of the plurality of tokens, wherein each key-value pair comprises two tokens of the plurality of tokens with a same horizontal coordinate or a same vertical coordinate;
determine a correct key-value pair of the plurality of key-value pairs comprising a key token and a value token based on the value token match a type of expected information associated with the key token, wherein the type of expected information is determined based on a classification of the key token; and
provide the classification and the correct key-value pair to a component of an application associated with the document.

13. The processing system of Claim 12, further configured to perform the method of any of Claims 2 to 11.

14. A computer program product comprising code that, when executed by one or more processors of a processing system, cause the processing system to become configured to perform the method of any of Claims 1 to 11.
